(19) **Europäisches Patentamt / European Patent Office / Office européen des brevets**

(11) **EP 3 068 637 B1**

(12) **FASCICULE DE BREVET EUROPEEN**

(45) Date de publication et mention
de la délivrance du brevet:
**30.08.2017 Bulletin 2017/35**

(21) Numéro de dépôt: **14793236.2**

(22) Date de dépôt: **02.10.2014**

(51) Int Cl.:
***B60C 23/06*** *(2006.01)*

(86) Numéro de dépôt international:
**PCT/FR2014/052499**

(87) Numéro de publication internationale:
**WO 2015/071558 (21.05.2015 Gazette 2015/20)**

(54) **PROCÉDÉ D'AIDE A LA DÉCISION PAR APPROCHE EMPIRIQUE ET MATRICIELLE DANS UN SYSTÈME DE SURVEILLANCE DE LA PRESSION DES PNEUMATIQUES D'UN VÉHICULE AUTOMOBILE**

VERFAHREN ZUR UNTERSTÜTZUNG DER ENTSCHEIDUNGSFINDUNG DURCH EINEN EMPIRISCHEN UND MATRIXBASIERTEN ANSATZ ZUR DRUCKÜBERWACHUNG DER REIFEN EINES KRAFTFAHRZEUGS

METHOD FOR DECISION-MAKING ASSISTANCE BY AN EMPIRICAL AND MATRIX-BASED APPROACH IN A SYSTEM FOR MONITORING THE PRESSURE OF THE TYRES OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2013 FR 1361109**

(43) Date de publication de la demande:
**21.09.2016 Bulletin 2016/38**

(73) Titulaire: **Renault S.A.S.**
**92100 Boulogne-Billancourt (FR)**

(72) Inventeurs:
• **PITAL-GIL, Guillermo**
  **F-75014 Paris (FR)**
• **SAINT-LOUP, Philippe**
  **F-78760 Jouars Pontchartrain (FR)**
• **DAVINS-VALLDAURA, Joan**
  **F-75014 Paris (FR)**

(56) Documents cités:
**DE-A1-102005 004 910     US-A1- 2007 061 100**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne le domaine du diagnostic de l'état de gonflage des pneumatiques équipant des roues d'un véhicule automobile. Plus particulièrement, l'invention concerne les méthodes conduisant à une détection indirecte d'un état de gonflage des pneumatiques.

Un état de gonflage défaillant d'un pneumatique, autrement dit un sous-gonflage de ce pneumatique, se caractérise par une baisse de pression du pneumatique par rapport à une pression normale de celui-ci, étant entendu que les cas de sous-gonflage englobent les cas de crevaison. Or, un état de gonflage défaillant d'un pneumatique peut provoquer l'éclatement de celui-ci, dans certaines conditions de conduite, mettant gravement en danger la sécurité des personnes embarquées dans le véhicule. Même en l'absence d'éclatement, un sous-gonflage présente l'inconvénient d'accroître la consommation de carburant du véhicule et la rapidité d'usure du pneumatique.

C'est pourquoi, une réglementation en cours d'adoption à l'échelle mondiale impose d'équiper progressivement tous les nouveaux véhicules automobiles de systèmes de surveillance de la pression des pneumatiques ou SSPP. La majorité de ces systèmes utilisent des capteurs de pression installés sur chaque pneumatique pour transmettre une information sur la pression des pneumatiques en temps réel à l'unité de contrôle moteur ou à une unité de calcul spécifique du véhicule pour traitement et prise en compte de cette information parmi divers phénomènes dynamiques susceptibles d'affecter eux aussi, de manière transitoire par exemple, la pression dans les pneumatiques. En cas de sous-gonflage, le système est conçu pour transmettre automatiquement un message d'alerte au conducteur, par exemple sous la forme d'un affichage sur le tableau de bord. Ce type de système nécessite toutefois d'intégrer aux pneumatiques un équipement de mesure relativement coûteux.

Par opposition avec ce premier type de système SSPP, un second type de système SSPP, dit SSPP indirect, se caractérise par l'absence de capteurs de pression et repose sur une estimation par des algorithmes appropriés de la probabilité de sous-gonflage de chaque pneumatique sur une plage de vitesse donnée, ainsi que d'un taux de confiance associé à cette probabilité, dépendant du temps passé dans la plage de vitesse, à partir de l'étude de la vitesse des roues du véhicule. La probabilité représente les chances en pourcentage d'être dans un état de sous-gonflage pour une roue donnée. Cette valeur est calculée en instantanée sur quelques périodes d'échantillonnage. Le taux de confiance représente un facteur d'oubli nécessaire au changement de plage de vitesse.

Même si ce second type de système de surveillance peut facilement être mis en oeuvre par exemple à partir des valeurs de vitesse de rotation des roues estimées ou mesurées par les capteurs du contrôle d'anti-blocage des roues (« Electronic Stability Program » ou ESP), il est toutefois moins précis que les systèmes de surveillance directs. En effet, en raison de l'absence de capteurs de pression, le nombre de fausses alertes de détection de sous-gonflage est susceptible d'augmenter car la probabilité estimée par les algorithmes dépend du temps de roulage, de l'apprentissage et de leur fiabilité à toutes les situations.

Les systèmes de surveillance indirects reposent plus précisément soit sur une analyse du rayon de roulement de la roue, soit sur une analyse des vibrations de la roue. L'analyse du rayon de la roue est mise en oeuvre par les systèmes de surveillance indirects qui reposent sur un algorithme basé sur l'étude de l'écart de vitesse entre chacune des roues. L'effet ici exploité tient au fait qu'un sous-gonflage d'un pneumatique induit une variation du rayon de roulement et donc de la vitesse angulaire. Ainsi, dès qu'un écart de vitesse entre des roues s'accroît, un problème de sous-gonflage est remonté. On connaît par exemple du document de brevet FR2927018 un système de surveillance indirect de l'état de gonflage des pneumatiques, mettant en oeuvre un tel algorithme de calcul comportant une mesure des vitesses angulaires des roues du véhicule, un calcul de plusieurs critères de comparaison des vitesses angulaires mesurées des roues et une analyse des critères calculés pour détecter l'état de gonflage de chaque roue du véhicule. La validité de ces critères, basés sur l'étude de l'écart des vitesses angulaires mesurées entre chacune des roues, est importante dans la mesure où de nombreux phénomènes dynamiques sont susceptibles de provoquer des variations non homogènes parmi les rayons de roulement des roues et ainsi augmenter de taux de fausses alertes concernant un état défectueux des pneumatiques. L'algorithme est alors conçu pour s'assurer qu'une disparité parmi les vitesses angulaires mesurées des roues présente une probabilité forte de traduire un état de gonflage défectueux d'au moins un des pneumatiques équipant le véhicule. La performance de cet algorithme dépend cependant du nombre de roues qui sont dégonflées. Ainsi, si un tel algorithme possède de bonnes performances lorsque la situation du véhicule correspond à une crevaison (dégonflage d'une roue), il n'est pas suffisamment performant dans les cas de diffusion (dégonflage lent de plusieurs roues).

L'analyse de la vibration de la roue est quant à elle mise en oeuvre par les systèmes de surveillance indirects fondés sur un algorithme qui repose sur l'étude spectrale de la vitesse de roue afin de surveiller des modes spécifiques. L'effet ici exploité tient au fait que les caractéristiques spectrales (par exemple, la distribution d'énergie dans différentes bandes de fréquences) d'un signal de vitesse angulaire de roue dépendent de la pression du pneumatique. Ainsi, si les modes surveillés sortent des gabarits qui leur sont propres, le système en déduit un problème de sous-gonflage. On connaît par exemple du document de brevet WO2012127139 un système de détection indirecte de l'état de gonflage des pneumatiques mettant en oeuvre un tel algorithme. Contrairement à l'algorithme précédent, qui repose sur l'analyse du rayon de roulement, cet algorithme exploitant l'étude spectrale du signal de vitesse angulaire de roue possède de bonnes performances dans les cas de diffusion (dégonflage lent de plusieurs roues), tandis qu'il n'est pas suffisamment performant pour les cas de crevaison (dégonflage d'une roue).

Il s'avère ainsi que les performances de chacun des algorithmes selon les deux méthodes d'analyse mises en oeuvre par les systèmes de surveillance indirects, dépendent du nombre de roues qui sont dégonflées.

Le brevet US2007061100 décrit un système de surveillance de la pression des pneumatiques mettant en oeuvre les deux méthodes d'analyses ci-dessus exposées, basées respectivement sur l'analyse du rayon de la roue et sur l'analyse de la vibration de la roue, dans lequel l'estimation de l'état de gonflage pour chaque pneumatique est basée à la fois sur les valeurs de sortie de l'algorithme selon la méthode d'analyse du rayon de la roue et sur les valeurs de sortie de l'algorithme selon la méthode d'analyse de la vibration des roues, de façon à compenser les carences individuelles des algorithmes selon les deux méthodes d'analyse. Plus précisément, on calcule, pour chaque pneumatique, une première valeur de probabilité de sous-gonflage issue de la valeur de sortie de l'algorithme selon la méthode d'analyse du rayon de la roue et une seconde valeur de probabilité de sous-gonflage issue de la valeur de sortie de l'algorithme selon la méthode d'analyse de la vibration de la roue, chaque valeur de probabilité étant indicative d'un écart entre la valeur de sortie et une valeur nominale et étant une fonction de répartition cumulative de probabilité. De là, l'estimation de l'état de gonflage pour chaque pneumatique est calculée à partir du produit des première et seconde valeurs de probabilité de sous-gonflage. Cette méthode de fusion des différentes valeurs de probabilité issues des algorithmes selon les deux méthodes d'analyse différentes n'est toutefois pas optimale.

Un but de l'invention est de proposer un procédé d'estimation en temps réel de l'apparition d'un défaut de pression sur au moins un pneumatique équipant des roues d'un véhicule automobile, capable de fusionner les données issues des algorithmes selon les deux méthodes d'analyse des vitesses de roue exposées plus haut et d'améliorer la robustesse de l'estimation dans les cas de sous-gonflage en tenant compte des performances des deux algorithmes.

A cette fin, l'invention a pour objet un procédé d'estimation de l'apparition d'un défaut de pression sur au moins un des pneumatiques équipant des roues d'un véhicule automobile, ladite estimation résultant d'une analyse des vitesses angulaires des roues selon un premier algorithme basé sur une analyse de l'écart de vitesses entre chacune des roues et selon un deuxième algorithme basé sur une analyse spectrale de la vitesse de roue, dans lequel chacun des premier et deuxième algorithmes fournit, pour chaque roue, une valeur de probabilité de sous-gonflage et de taux de confiance associé en fonction d'une plage de vitesse de roue. Selon l'invention, le procédé comprend une phase de prétraitement des valeurs de probabilité de sous-gonflage et de taux de confiance issues des premier et deuxième algorithmes, comprenant la détermination d'un résultat de probabilité robuste prenant en compte toutes les plages de vitesse pour chaque roue et chaque algorithme, et une étape de transmission desdits résultat de probabilité robuste à un module de décision mettant en oeuvre une étape de fusion consistant à privilégier l'un ou l'autre des résultats de probabilité robuste issus des deux algorithmes selon le nombre de roues ayant probablement un problème de sous-gonflage ou selon la position des roues ayant probablement un problème de sous-gonflage, de manière à fournir, pour une situation de sous-gonflage donnée, un résultat de détection unique de ladite situation de sous-gonflage servant au déclenchement d'un signal d'alerte de sous-gonflage.

Avantageusement, la détermination du résultat de probabilité robuste prenant en compte toutes les plages de vitesse pour chaque roue et chaque algorithme comprend une étape de détermination de résultats de probabilité robuste intermédiaires pour une plage de vitesse donnée et une roue donnée ayant intégrés les valeurs de taux de confiance, respectivement pour chaque couple de valeurs de probabilité et de taux de confiance associé issu du premier algorithme et pour chaque couple de valeurs de probabilité et de taux de confiance associé issu du deuxième algorithme, et une étape de sélection du résultat de probabilité robuste intermédiaire maximum pour chaque algorithme afin de déterminer ledit résultat de probabilité robuste prenant en compte toutes les plages de vitesse pour chaque roue et chaque algorithme.

De préférence la détermination des résultats de probabilité robuste intermédiaires comprend une étape préalable d'adaptation du taux de confiance par une interpolation linéaire entre les valeurs de taux de confiance pour chaque algorithme respectivement, de manière à maximiser l'influence des taux de confiance élevés dans l'obtention desdits résultats de probabilité robuste intermédiaires et à minimiser celle des taux de confiance faibles.

Avantageusement, le procédé peut comprendre une étape de détection d'une situation de sous-gonflage par seuillage desdits résultats de probabilité robuste issus respectivement du premier et du deuxième algorithme, par rapport à deux seuils respectifs, avant transmission desdits résultats de probabilité robuste au module de décision.

Avantageusement, le module de fusion utilise une matrice de fusion des résultats de probabilité robuste issus des deux algorithmes en prenant comme critère d'entrée de la matrice le nombre de roues ayant probablement un problème de sous-gonflage ou la position des roues ayant probablement un problème de sous-gonflage.

Avantageusement, le module de décision opère une fusion des résultats à l'intersection des entrées de la matrice de fusion en appliquant au moins un critère de fusion qui tient compte de l'indice de ligne et de l'indice de colonne dans la matrice.

Selon un mode de réalisation, l'application du critère de fusion à l'intersection des entrées de la matrice peut consister à déterminer un statut booléen indicateur de la situation de sous-gonflage en fonction de la comparaison des résultats de probabilité robuste issus des deux algorithmes avec des seuils respectifs prédéfinis.

Selon une variante, l'application du critère de fusion à l'intersection des entrées de la matrice de fusion peut consister à sélectionner les résultats de l'un ou l'autre des deux algorithmes pour déterminer le résultat de détection unique.

Selon encore une variante, l'application du critère de fusion à l'intersection des entrées de la matrice consiste à calculer un résultat pondéré basé sur l'application d'un poids respectif, fonction de l'indice de ligne et de l'indice de colonne considérés de la matrice, aux résultats de probabilité robuste issus des deux algorithmes pour déterminer le résultat de détection unique.

L'invention concerne également un système de surveillance de la pression des pneumatiques équipant les roues d'un véhicule automobile du type comportant un premier algorithme d'estimation de l'apparition d'un défaut de pression sur au moins un des pneumatiques basé sur une analyse de l'écart de vitesses entre chacune des roues et un deuxième algorithme d'estimation de l'apparition d'un défaut de pression sur au moins un des pneumatiques basé sur une analyse spectrale de la vitesse de roue, chacun des premier et deuxième algorithmes fournit, pour chaque roue, une valeur de probabilité de sous-gonflage et de taux de confiance associé en fonction d'une plage de vitesse de roue, ledit système étant caractérisé en ce qu'il comprend des moyens de prétraitement des valeurs de probabilité de sous-gonflage et de taux de confiance issues des premier et deuxième algorithmes pour déterminer un résultat de probabilité robuste prenant en compte toutes les plages de vitesse pour chaque roue et chaque algorithme, et un module de décision comprenant des moyens de fusion des résultats de probabilité robuste issus des deux algorithmes, conçus pour privilégier l'un ou l'autre des résultats de probabilité robuste issus des deux algorithmes selon le nombre de roues ayant probablement un problème de sous-gonflage ou selon la position des roues ayant probablement un problème de sous-gonflage, de manière à fournir, pour une situation de sous-gonflage donnée, un résultat de détection unique de ladite situation de sous-gonflage servant au déclenchement d'un signal d'alerte de sous-gonflage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la Figure 1 illustre un exemple d'interpolation linéaire entre les taux de confiance pour réaliser l'adaptation des valeurs de taux de confiance brutes issues des deux algorithmes ;
- la Figure 2 est un schéma illustrant le fonctionnement général du système de surveillance de l'invention intégrant le module de décision à base de fusion matricielle ;
- la Figure 3 est un schéma illustrant un exemple de matrice carrée à 5 x 5 lignes-colonnes mise en oeuvre dans le module de décision selon un premier mode de réalisation de l'invention ;
- la Figure 4 est un schéma illustrant une matrice carrée à 16 x 16 lignes-colonnes mise en oeuvre dans le module de décision selon un deuxième mode de réalisation de l'invention.

On souhaite donc caractériser de façon robuste l'apparition d'un défaut de pression sur au moins un des pneumatiques équipant les roues du véhicule en répondant à la question de savoir si l'un des pneumatiques présente un état de sous-gonflage (y compris crevaison) compte tenu des données de probabilité et de taux de confiance associé, fournies pour chaque pneumatique et par plage de vitesse, en tant que signaux de détection par les deux algorithmes de détection travaillant respectivement selon la méthode d'analyse de l'écart de vitesse angulaire entre chacune des roues (dit algorithme temporel par la suite) et selon la méthode d'analyse spectrale de la vitesse de roue (dit algorithme fréquentiel) par la suite.

Le module de décision selon l'invention a pour objectif de fusionner les signaux de détection issus de ces deux algorithmes temporel et fréquentiel, afin de tirer le meilleur parti de chaque système et minimiser les erreurs de détection par rapport à une situation de sous-gonflage donnée influant sur les performances respectives des deux algorithmes, et à la phase de roulage. Conformément à l'invention, le module de décision est basé sur une approche empirique mettant en oeuvre une matrice de fusion permettant de filtrer les mauvaises performances de chacun des deux algorithmes en fonction d'une analyse comparative de leurs signaux de détection respectifs pour une situation de sous-gonflage donnée.

Le module de décision consiste en une approche de développement simple réalisé avec des tables et matrices d'interprétation des signaux de détection issus des deux algorithmes, fournis en entrée du module de décision.

Une phase de prétraitement des signaux de détection des deux algorithmes fréquentiel et temporel est préférentiellement mise en oeuvre préalablement à leur utilisation par le module de décision. Cette phase de prétraitement comprend tout d'abord une étape d'adaptation des signaux de détection fournis par les deux algorithmes temporel et fréquentiel. Cette étape préalable d'adaptation vise à permettre de lisser et d'optimiser les résultats dynamiques temps réel en sortie du module de décision. Comme expliqué en préambule, chacun des deux algorithmes fournit en sortie, pour chaque roue du véhicule, des signaux de détection comprenant une valeur de probabilité de sous-gonflage P et une valeur de taux de confiance associé T et ce, en fonction d'une plage de vitesse. La valeur de probabilité P estimée par chacun des deux algorithmes représente les chances en pourcentage pour la roue considérée d'être dans un état de sous-gonflage. Cette valeur de probabilité P par roue et en fonction d'une plage de vitesse est calculée par chacun des deux algorithmes en instantanée sur quelques périodes d'échantillonnage. La valeur de taux de confiance T représente le facteur d'oubli nécessaire au changement de plage de vitesse. En effet, la valeur de probabilité P contient la mémoire des dernières valeurs de chance d'être en état de sous-gonflage vues pour chacune des plages de vitesse. Les plages de vitesses peuvent être de fraction homogène ou hétérogène, répartie de façon contigüe, juxtaposé ou disjointe, pouvant traiter en totalité ou partiellement le spectre de vitesse [Vmin - Vmax].

Or, lorsque la vitesse du véhicule parcourt l'ensemble ou quelques unes des plages de vitesse, la donnée de probabilité conserve les dernières valeurs vues dans chacune des plages de vitesse parcourues. La plage de vitesse correspondant à la vitesse courante du véhicule possède alors un taux de confiance élevé. Inversement plus le temps s'écoule depuis la dernière actualisation de la valeur de probabilité pour une plage de vitesse donnée et une roue donnée, plus la valeur de taux de confiance associé à cette valeur de probabilité est faible. Ainsi, lorsque l'on fait le produit P x T (Probabilité x Taux de confiance), on obtient un résultat de probabilité robuste intermédiaire, qui tient compte de la valeur de probabilité, mais aussi de l'obsolescence possible de cette valeur.

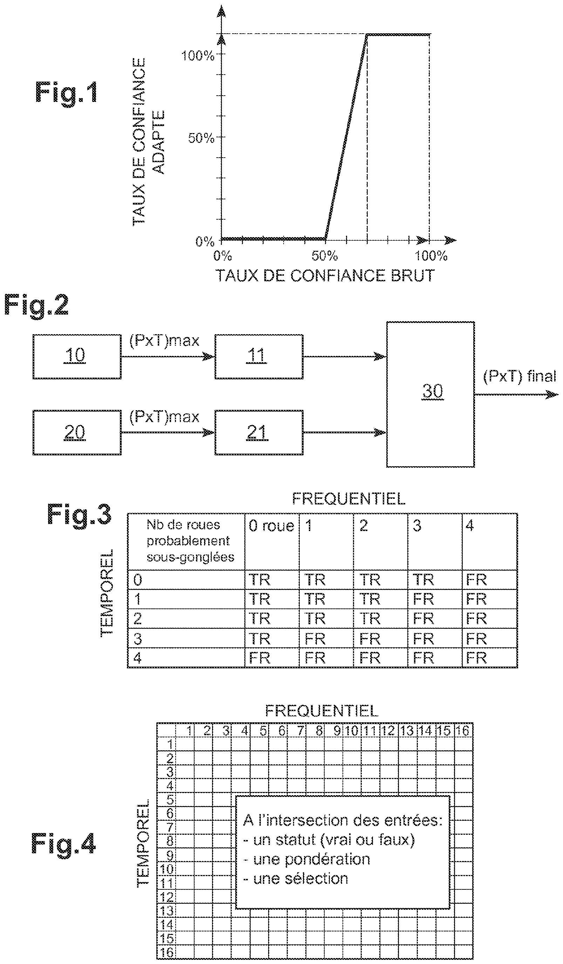

Aussi, afin d'exploiter au mieux ces résultats de probabilité robuste intermédiaires issus des produits P x T, l'étape préalable d'adaptation consiste préférentiellement à réaliser une adaptation du taux de confiance par une interpolation linéaire entre les valeurs de taux de confiance pour chaque algorithme respectivement, de manière à transformer lesdits résultats de probabilité robuste intermédiaires en maximisant l'influence des taux de confiance élevés dans l'obtention des résultats du produit P x T et en abaissant au contraire celle des taux de confiance faibles. La figure 1 illustre un exemple d'interpolation linéaire entre les taux de confiance permettant une adaptation des valeurs de taux de confiance brutes issues des algorithmes temporel et fréquentiel. Les valeurs de taux de confiance brutes sont représentées en abscisses, tandis que les valeurs de taux de confiance adaptées sont représentées en ordonnées. Ainsi, selon cet exemple, on affecte une valeur de taux de confiance adaptée nulle aux valeurs de taux de confiance brutes comprises entre 0 et 50%. Autrement dit, les valeurs de probabilité P associées à des valeurs de confiance brutes comprises entre 0 et 50% sont ignorées dans les résultats de probabilité robuste intermédiaires. A l'inverse, on affecte une valeur de taux de confiance adaptée égale à 100% aux valeurs de taux de confiance brutes comprises entre 70% et 100%. De la sorte, les valeurs de probabilité P associées à des valeurs de confiance brutes comprises entre 70% et 100% sont pleinement considérées et les résultats de probabilité robuste intermédiaires P x T sont ainsi assimilés aux valeurs de probabilité P. Dit autrement, l'adaptation du taux de confiance pour ces valeurs de taux de confiance brutes vise ici à ne tenir compte que des valeurs de probabilité dans les résultats de probabilité robuste intermédiaires. Enfin, pour les valeurs de taux de confiance brutes comprises entre 50% et 70%, les valeurs de taux de confiance adaptées suivent une loi linéaire entre 0 et 100% permettant de pondérer la représentativité les valeurs de probabilité P dans les résultats de probabilité robuste intermédiaires proportionnellement aux valeurs de taux de confiance brutes fournies.

En variante, plutôt que d'adapter les taux de confiance pour optimiser les résultats de probabilité robuste obtenus, l'étape d'adaptation pourrait consister en une adaptation des valeurs de probabilité, qui pourrait être réalisée également par une interpolation linéaire entre les valeurs de probabilité pour chaque algorithme respectivement, de manière à optimiser les résultats de probabilité robuste intermédiaires P x T calculés en maximisant l'influence des probabilités élevées et en abaissant au contraire celle des probabilités faibles.

On obtient donc pour chacun des deux algorithmes temporel et fréquentiel une pluralité de résultats de probabilités robuste intermédiaires P x T optimisés, respectivement pour une plage de vitesse donnée et une roue donnée, en ayant intégrés les valeurs de taux de confiance adaptées par interpolation linéaire (ou en variante les valeurs de probabilité adaptées). Cette étape permet avantageusement d'écarter les résultats incorporant des valeurs de taux de confiance moyennes et faibles.

Suite à cette étape d'adaptation des valeurs de taux de confiance conduisant à la détermination, pour chacun des deux algorithmes, de résultats de probabilité robuste intermédiaires P x T optimisés, par roue et pour toutes les plages de vitesse considérées, la phase de prétraitement met en oeuvre une étape supplémentaire de sélection des plages de vitesse, conduisant à la détermination d'un résultat de probabilité robuste prenant en compte toutes les plages de vitesse pour chaque roue et chaque algorithme, à partir des résultats de probabilité robuste intermédiaires optimisés issus respectivement des algorithmes temporel et fréquentiel.

Pour ce faire, l'étape de sélection de la plage de vitesse consiste à sélectionner pour chaque algorithme et pour chaque roue, la plage de vitesse pour laquelle le résultat de probabilité robuste intermédiaire P x T optimisé précédemment calculé est le plus grand. Ainsi, comme illustré en figure 2, suite à la phase de prétraitement des signaux de détection issus des sorties respectives des deux algorithmes fréquentiel et temporel référencés 10 et 20 sur la figure 2, on a pour chacun d'eux, 4 valeurs de maximum $(P \times T)_{max}$ par roue, constituant les résultats de probabilité robuste pour chaque roue. Le but du module de décision étant de détecter un problème de sous-gonflage, dès lors que pour une plage de vitesse, on a un résultat de probabilité robuste optimisé indiquant un problème de sous-gonflage pour une roue, on considère que c'est suffisant car les plages de vitesse sont indépendantes entre elles.

La phase de prétraitement est ensuite suivie d'une phase de détection d'une situation de sous-gonflage et de fusion des données issues de la phase de prétraitement.

En particulier, afin d'apporter plus de certitude et donc de robustesse à la détection d'une situation de sous-gonflage, celle-ci est déterminée par seuillage, en 11 et 21 sur la figure 2, des signaux de détection prétraités $(P \times T)_{max}$ issus respectivement de l'algorithme fréquentiel 10 et l'algorithme temporel 20, par rapport à deux seuils respectifs. Chaque seuil respectif est défini comme étant le seuil par rapport à un minimum pour lequel on considère qu'un résultat de probabilité robuste $(P \times T)_{max}$ est représentatif d'un problème de sous-gonflage en cours de détection.

Dès lors que les deux conditions de seuil sont remplis en 11 et 21, on obtient pour chacun des deux algorithmes 10, 20 en amont du module de décision référencé en 30 sur la figure 2, une situation de sous-gonflage.

Comme expliqué précédemment en préambule, les situations de sous-gonflage détectées par chacun des deux algorithmes temporel et fréquentiel ont chacune leurs faiblesses et leurs avantages, mais sont complémentaires. Ainsi, l'algorithme temporel, du fait qu'il est basé sur l'analyse de l'écart de vitesse entre les roues, est performant pour la détection de situations de sous-gonflage d'une seule roue (ou crevaison d'une roue), mais n'est pas suffisamment performant pour détecter des situations de sous-gonflage de plusieurs roues liées à un dégonflage lent de plusieurs roues. A l'inverse, l'algorithme fréquentiel, qui repose sur l'étude spectrale de la vitesse de roue, possède des bonnes performances dans ces situations de sous-gonflage de plusieurs roues mais, par contre, il n'est pas suffisamment performant concernant les situations de sous-gonflage d'une roue par rapport aux autres. Afin de sortir un résultat de détection unique pour les deux algorithmes par rapport à la situation de sous-gonflage détectée, le module de décision 30 va opérer une étape de fusion des signaux de détection prétraités issus de chacun des deux algorithmes correspondant à la situation de sous-gonflage détectée. Cette étape de fusion doit permettre de s'affranchir au maximum des fausses alertes et des non-détections.

Pour ce faire, le module de décision 30 utilise une matrice de fusion ayant en entrée un critère commun. La matrice de fusion doit permettre de contrôler la cohérence des signaux de détection prétraités de chacun des deux algorithmes en amont du module de décision, l'un par rapport à l'autre.

Selon un premier mode de réalisation, le module de décision 30 met en oeuvre une matrice de fusion des résultats des deux algorithmes respectivement fréquentiel et temporel en prenant comme critère d'entrée de la matrice le nombre de roues ayant un problème de sous-gonflage (de 0 roue ayant un problème de sous-gonflage à 4 roues ayant un problème de sous-gonflage), soient 5 situations possibles par algorithme. On obtient ainsi une matrice carrée à 5 x 5 lignes-colonnes comme illustrée à la figure 3, les lignes de la matrice correspondant par exemple aux résultats issus de l'algorithme temporel et les colonnes de la matrice à ceux de l'algorithme fréquentiel. Selon ce mode de réalisation, une étape de fusion des données de la matrice peut consister à privilégier l'un ou l'autre des résultats de probabilité robuste issus des deux algorithmes selon l'indice de ligne et l'indice de colonne, en l'occurrence, dans ce mode de réalisation, selon le nombre de roues probablement en situation de sous-gonflage détecté par l'un et l'autre des deux algorithmes. La figure 3 illustre un exemple d'une telle matrice de fusion, où à l'intersection des entrées de la matrice, constituées par le nombre de roues ayant un problème de sous-gonflage pour chacun des deux algorithmes respectifs, on applique le critère de fusion suivant :

$$\text{Fusion} = (P \times T)_{\text{Fréquentiel}} \text{ OU } (P \times T)_{\text{Temporel}}$$

où : $(P \times T)_{\text{Fréquentiel}}$ est le résultat de probabilité robuste issu de l'algorithme fréquentiel et $(P \times T)_{\text{Temporel}}$ est le résultat de probabilité robuste issu de l'algorithme temporel.

La fusion matricielle ainsi réalisée fournit un résultat de détection final $(P \times T)_{\text{final}}$ pour chaque situation de sous-gonflage détectée, qui résulte du choix entre le résultat de l'un ou l'autre des deux algorithmes, symbolisé par les notations TR ou FR dans la matrice illustrée à la figure 3, selon que le choix correspond au résultat de probabilité robuste issu de l'algorithme temporel ou de l'algorithme fréquentiel. Le choix tient compte avantageusement du nombre de roues ayant probablement un problème de sous-gonflage détecté par chacun des deux algorithmes respectivement. Si le résultat de détection final $(P \times T)_{\text{final}}$ est supérieur à un seuil prédéfini, alors un signal d'alerte est déclenché, permettant d'avertir le conducteur de la présence d'un problème de sous-gonflage pour au moins une roue du véhicule.

Selon un autre mode de réalisation, le module de décision 30 met en oeuvre une matrice de fusion des résultats des deux algorithmes fréquentiel et temporel, en prenant comme critère d'entrée de la matrice la position des roues détectées par chacun des deux algorithmes comme pouvant avoir un problème de sous-gonflage, soient $4^2 = 16$ situations différentes, qui peuvent être codifiées de la manière suivante, selon tous les cas possibles pouvant se présenter :

- 1 : aucune roue sous-gonflée ;
- 2 : RD sous-gonflée ;
- 3 : RG sous-gonflée ;
- 4 : RG et RD sous-gonflées ;

- 5 : VD sous-gonflée ;
- 6 : VD et RD sous-gonflées ;
- 7 : VD et RG sous-gonflées ;
- 8 : VD et RG et RD sous-gonflées ;
- 9 : VG sous-gonflée ;
- 10 : VG et RD sous-gonflées ;
- 11 : VG et RG sous-gonflées ;
- 12 : VG et RG et RD sous-gonflées ;
- 13 : VG et VD sous-gonflées ;
- 14 : VG et VD et RD sous-gonflées ;
- 15 : VG et VD et RG sous-gonflées ;
- 16 : VG et VD et RG et RD sous-gonflées ;

Avec la position des roues identifiées de la manière suivante:

V = avant,
R = arrière,
G = gauche,
D = droite.

On obtient ainsi une matrice carrée à 16 x 16 lignes-colonnes [$\alpha$ij] comme illustrée à la figure 4, i et j variant de 1 à 16 selon la codification établie ci-dessus, les lignes de la matrice correspondant par exemple aux résultats issus de l'algorithme temporel et les colonnes de la matrice à ceux de l'algorithme fréquentiel. l'étape de fusion des données à l'intersection des entrées de la matrice peut être mise en oeuvre de plusieurs manières.

Ainsi, un premier critère de fusion des données à l'intersection des entrées de la matrice, peut consister à déterminer un statut correspondant par exemple à un booléen (vrai-faux) indiquant une situation de sous-gonflage ou non en fonction des entrées. Par exemple, si on a pour au moins une roue considérée, la valeur $(P \times T)_{Fréquentiel}$ supérieure à un premier seuil prédéfini et si on a la valeur $(P \times T)_{Temporel}$ supérieure à un second seuil prédéfini, alors le statut de situation de sous-gonflage passe à vrai.

En variante, un autre critère de fusion des données utilisé pour remplir la matrice peut consister en l'attribution d'un poids à chacun des résultats de probabilité robuste issus des deux algorithmes fréquentiels et temporels, respectivement PoidsMatrice$_{Fréquentiel}$ et PoidsMatrice$_{Temporel}$, de sorte qu'à l'intersection des entrées de la matrice, on a un résultat unique pondéré :

$$\text{Fusion} = [\text{PoidsMatrice}_{Fréquentiel} \times (P \times T)_{fréquentiel}] + [\text{PoidsMatrice}_{Temporel} \times (P \times T)_{temporel}]$$

Par exemple, pour la valeur de la matrice correspondant au cas où l'algorithme temporel indique une roue arrière droite probablement sous-gonflée et l'algorithme fréquentiel n'indique au contraire aucune roue probablement sous-gonflée, on attribue un poids PoidsMatrice$_{Temporel}$ égal à 0,9 au résultat issu de l'algorithme temporel, et un poids PoidsMatrice$_{Fréquentiel}$ égal à (1-0,9) à l'algorithme fréquentiel. Si le résultat ainsi pondéré issu de la fusion des données des deux algorithmes est supérieur à un seuil prédéfini, alors on déclenche un signal d'alerte à destination du conducteur.

Selon encore une variante, un autre critère de fusion des données peut consister en la sélection des résultats de l'un ou l'autre des deux algorithmes, selon les principes de la fusion matricielle exposée plus haut en référence à la figure 3, de sorte que, à l'intersection des entrées de la matrice, on applique le critère de fusion suivant :

$$\text{Fusion} = (P \times T)_{fréquentiel} \text{ OU } (P \times T)_{temporel}$$

A noter que les critères de fusion décrits ci-dessus peuvent s'appliquer pour l'ensemble des roues ou individuellement par roue (matrice 5*5 ou 16*16).

De préférence, afin de temporiser un résultat de détection issu de la fusion des données qui serait trop dynamique ou instantané, on ajoute, en sortie du module de décision 30, un compteur conçu pour être incrémenté ou décrémenté à chaque détection ou non détection d'un problème de sous-gonflage, de façon à permettre d'adapter la vitesse de détection en fonction des besoins. Le compteur permet ainsi de déclencher le signal d'alerte seulement après une certaine pérennité de signalement de sous-gonflage présenté par la fusion des données telle que présentée précédemment.

On utilise par exemple un compteur saturé aux valeurs d'un octet (0-255). On peut par exemple décompter d'un pas fixe ou variable depuis une valeur initiale pouvant être de 255 à chaque signalement de sous-gonflage découlant du résultat de détection fourni par la matrice de fusion et incrémenter de manière similaire à chaque signalement de gonflage optimal. Dès qu'un seuil minimum d'alerte est atteint, par exemple égal à la valeur 0, on peut conclure que le signalement de sous-gonflage est suffisamment pérenne et on déclenche le signal d'alerte. Une fois le signal d'alerte déclenché, le compteur est bloqué à la valeur du seuil d'alerte et une requête en réinitialisation automatique ou manuelle est émise pour remettre le compteur à la valeur initiale.

**Revendications**

1. Procédé d'estimation de l'apparition d'un défaut de pression sur au moins un des pneumatiques équipant des roues d'un véhicule automobile, ladite estimation résultant d'une analyse des vitesses angulaires des roues selon un premier algorithme (20) basé sur une analyse de l'écart de vitesses entre chacune des roues et selon un deuxième algorithme (10) basé sur une analyse spectrale de la vitesse de roue, dans lequel chacun des premier et deuxième algorithmes fournit, pour chaque roue, une valeur de probabilité de sous-gonflage et de taux de confiance associé en fonction d'une plage de vitesse de roue, ledit procédé étant **caractérisé en ce qu'**il comprend une phase de prétraitement des valeurs de probabilité de sous-gonflage et de taux de confiance issues des premier et deuxième algorithmes, comprenant la détermination d'un résultat de probabilité robuste ($(P \times T)_{max}$) prenant en compte toutes les plages de vitesse pour chaque roue et chaque algorithme, et une étape de transmission desdits résultat de probabilité robuste ($(P \times T)_{max}$) à un module de décision (30) mettant en oeuvre une étape de fusion consistant à privilégier l'un ou l'autre des résultats de probabilité robuste issus des deux algorithmes selon le nombre de roues ayant probablement un problème de sous-gonflage ou selon la position des roues ayant probablement un problème de sous-gonflage, de manière à fournir, pour une situation de sous-gonflage donnée, un résultat de détection unique ($(P \times T)_{final}$) de ladite situation de sous-gonflage servant au déclenchement d'un signal d'alerte de sous-gonflage.

2. Procédé selon la revendication 1, **caractérisé en ce que** la détermination du résultat de probabilité robuste ($(P \times T)_{max}$) prenant en compte toutes les plages de vitesse pour chaque roue et chaque algorithme comprend une étape de détermination de résultats de probabilité robuste intermédiaires pour une plage de vitesse donnée et une roue donnée ayant intégrés les valeurs de taux de confiance, respectivement pour chaque couple de valeurs de probabilité et de taux de confiance associé issu du premier algorithme et pour chaque couple de valeurs de probabilité et de taux de confiance associé issu du deuxième algorithme, et une étape de sélection du résultat de probabilité robuste intermédiaire maximum pour chaque algorithme afin de déterminer ledit résultat de probabilité robuste ($(P \times T)_{max}$) prenant en compte toutes les plages de vitesse pour chaque roue et chaque algorithme.

3. Procédé selon la revendication 2, **caractérisé en ce que** la détermination des résultats de probabilité robuste intermédiaires comprend une étape préalable d'adaptation du taux de confiance par une interpolation linéaire entre les valeurs de taux de confiance pour chaque algorithme respectivement, de manière à maximiser l'influence des taux de confiance élevés dans l'obtention desdits résultats de probabilité robuste intermédiaires et à minimiser celle des taux de confiance faibles.

4. Procédé selon l'une quelconque des revendications 1 à 3, **caractérisé en ce qu'**il comprend une étape de détection d'une situation de sous-gonflage par seuillage (11, 21) desdits résultats de probabilité robuste ($(P \times T)_{max}$) issus respectivement du premier et du deuxième algorithme, par rapport à deux seuils respectifs, avant transmission desdits résultats de probabilité robuste au module de décision (30).

5. Procédé selon l'une quelconque des revendications 1 à 4, **caractérisé en ce que** le module de fusion (30) utilise une matrice de fusion des résultats de probabilité robuste issus des deux algorithmes (10, 20) en prenant comme critère d'entrée de la matrice le nombre de roues ayant probablement un problème de sous-gonflage ou la position des roues ayant probablement un problème de sous-gonflage.

6. Procédé selon la revendication 5, caractérisé en ce le module de décision (30) opère une fusion des résultats à l'intersection des entrées de la matrice de fusion en appliquant au moins un critère de fusion qui tient compte de l'indice de ligne et de l'indice de colonne dans la matrice.

7. Procédé selon la revendication 6, **caractérisé en ce que** l'application du critère de fusion à l'intersection des entrées de la matrice consiste à déterminer un statut booléen indicateur de la situation de sous-gonflage en fonction de la comparaison des résultats de probabilité robuste issus des deux algorithmes avec des seuils respectifs prédéfinis.

8. Procédé selon la revendication 6, **caractérisé en ce que** l'application du critère de fusion à l'intersection des entrées de la matrice de fusion consiste à sélectionner les résultats de l'un ou l'autre des deux algorithmes pour déterminer le résultat de détection unique.

9. Procédé selon la revendication 6, **caractérisé en ce que** l'application du critère de fusion à l'intersection des entrées de la matrice consiste à calculer un résultat pondéré basé sur l'application d'un poids respectif, fonction de l'indice de ligne et de l'indice de colonne considérés de la matrice, aux résultats de probabilité robuste issus des deux algorithmes pour déterminer le résultat de détection unique.

10. Système de surveillance de la pression des pneumatiques équipant les roues d'un véhicule automobile du type comportant un premier algorithme (20) d'estimation de l'apparition d'un défaut de pression sur au moins un des pneumatiques basé sur une analyse de l'écart de vitesses entre chacune des roues et un deuxième algorithme (10) d'estimation de l'apparition d'un défaut de pression sur au moins un des pneumatiques basé sur une analyse spectrale de la vitesse de roue, chacun des premier et deuxième algorithmes fournit, pour chaque roue, une valeur de probabilité de sous-gonflage et de taux de confiance associé en fonction d'une plage de vitesse de roue, ledit système étant **caractérisé en ce qu'**il comprend des moyens de prétraitement des valeurs de probabilité de sous-gonflage et de taux de confiance issues des premier et deuxième algorithmes pour déterminer un résultat de probabilité robuste prenant en compte toutes les plages de vitesse pour chaque roue et chaque algorithme, et un module de décision (30) comprenant des moyens de fusion des résultats de probabilité robuste issus des deux algorithmes, conçus pour privilégier l'un ou l'autre des résultats de probabilité robuste issus des deux algorithmes selon le nombre de roues ayant probablement un problème de sous-gonflage ou selon la position des roues ayant probablement un problème de sous-gonflage, de manière à fournir, pour une situation de sous-gonflage donnée, un résultat de détection unique ($(P \times T)_{final}$) de ladite situation de sous-gonflage servant au déclenchement d'un signal d'alerte de sous-gonflage.

## Patentansprüche

1. Verfahren zur Abschätzung des Auftretens eines falschen Drucks an mindestens einem der Reifen, welche Räder eines Kraftfahrzeugs ausrüsten, wobei die Abschätzung aus einer Analyse der Winkelgeschwindigkeiten der Räder gemäß einem ersten Algorithmus (20), welcher auf einer Analyse der Abweichung von Geschwindigkeiten zwischen jedem der Reifen basiert, und gemäß einem zweiten Algorithmus (10) resultiert, welcher auf einer Spektralanalyse der Radgeschwindigkeit basiert, bei welchem sowohl der erste als auch der zweite Algorithmus für jedes Rad einen Wert der Wahrscheinlichkeit für zu niedrigen Luftdruck und der zugeordneten Vertrauensrate in Abhängigkeit von einem Geschwindigkeitsbereich des Rads liefert, wobei das Verfahren **dadurch gekennzeichnet ist, dass** es eine Phase zur Vorbehandlung der Werte der Wahrscheinlichkeit für zu niedrigen Luftdruck und der Vertrauensrate, welche von dem ersten und zweiten Algorithmus stammen, welche das Bestimmen eines Ergebnisses robuster Wahrscheinlichkeit ($(P \times T)_{max}$), welches sämtliche Geschwindigkeitsbereiche für jedes Rad und jeden Algorithmus berücksichtigt, und einen Schritt des Übertragens der Ergebnisse robuster Wahrscheinlichkeit ($(P \times T)_{max}$) an ein Entscheidungsmodul (30) aufweist, welches einen Schritt des Vereinigens einsetzt, welcher darin besteht, das eine oder das andere der Ergebnisse robuster Wahrscheinlichkeit, welche von den beiden Algorithmen stammen, entsprechend der Anzahl von Rädern mit wahrscheinlich einem Problem von zu niedrigem Luftdruck oder entsprechend der Position der Räder mit wahrscheinlich einem Problem von zu niedrigem Luftdruck zu bevorzugen, um bei einer gegebenen Situation von zu niedrigem Luftdruck ein eindeutiges Erfassungsergebnis ($(P \times T)_{final}$) der Situation von zu niedrigem Luftdruck zu liefern, welches dem Auslösen eines Warnsignals von zu niedrigem Luftdruck dient.

2. Verfahren nach Anspruch 1, **dadurch gekennzeichnet, dass** das Bestimmen des Ergebnisses robuster Wahrscheinlichkeit ($(P \times T)_{max}$), welches sämtliche Geschwindigkeitsbereiche für jedes Rad und jeden Algorithmus berücksichtigt, einen Schritt des Bestimmens von Zwischenergebnissen robuster Wahrscheinlichkeit für einen gegebenen Geschwindigkeitsbereich und ein gegebenes Rad mit integrierten Werten der Vertrauensrate für jeweils jedes Wertepaar aus Wahrscheinlichkeit und verknüpfter Vertrauensrate, welches von dem ersten Algorithmus stammt, und für jedes Wertepaar aus Wahrscheinlichkeit und verknüpfter Vertrauensrate, welches von dem zweiten Algorithmus stammt, und einen Schritt des Auswählens des maximalen Zwischenergebnisses robuster Wahrscheinlich für jeden Algorithmus aufweist, um das Ergebnis robuster Wahrscheinlichkeit ($(P \times T)_{max}$) zu bestimmen, welches sämtliche Geschwindigkeitsbereiche für jedes Rad und jeden Algorithmus berücksichtigt.

3. Verfahren nach Anspruch 2, **dadurch gekennzeichnet, dass** das Bestimmen der Zwischenergebnisse robuster Wahrscheinlichkeit einen vorhergehenden Schritt der Anpassung der Vertrauensrate durch eine lineare Interpolation zwischen den Werten der Vertrauensrate für jeden Algorithmus jeweils aufweist, um den Einfluss der hohen Vertrauensraten bei der Erzielung der Zwischenergebnisse robuster Wahrscheinlichkeit zu maximieren und jenen der schwachen Vertrauensraten zu minimieren.

4. Verfahren nach einem der Ansprüche 1 bis 3, **dadurch gekennzeichnet, dass** es einen Schritt des Erfassens einer Situation von zu niedrigem Luftdruck durch Schwellenwertverarbeitung (11, 21) der Ergebnisse robuster Wahrscheinlichkeit ($(P \times T)_{max}$), welche jeweils vom ersten und zweiten Algorithmus stammen, in Bezug auf zwei jeweilige Schwellenwerte vor dem Übertragen der Ergebnisse robuster Wahrscheinlichkeit an das Entscheidungsmodul (30) aufweist.

5. Verfahren nach einem der Ansprüche 1 bis 4, **dadurch gekennzeichnet, dass** das Modul des Vereinigens (30) eine Matrix zur Vereinigung der Ergebnisse robuster Wahrscheinlichkeit, welche von den beiden Algorithmen (10, 20) stammen, verwendet, indem als Eingangskriterium der Matrix die Zahl der Räder mit wahrscheinlich einem Problem von zu niedrigem Luftdruck oder die Position der Räder mit wahrscheinlich einem Problem von zu niedrigem Luftdruck genommen wird.

6. Verfahren nach Anspruch 5, **dadurch gekennzeichnet, dass** das Entscheidungsmodul (30) eine Vereinigung der Ergebnisse an der Kreuzung der Einträge der Vereinigungsmatrix durchführt, indem mindestens ein Vereinigungskriterium angewendet wird, welches den Zeilenindex und den Spaltenindex in der Matrix berücksichtigt.

7. Verfahren nach Anspruch 6, **dadurch gekennzeichnet, dass** die Anwendung des Vereinigungskriteriums an der Kreuzung der Einträge der Matrix darin besteht, einen booleschen Status zu bestimmen, welcher die Situation von zu niedrigem Luftdruck in Abhängigkeit von dem Vergleich der Ergebnisse robuster Wahrscheinlichkeit, welche von den beiden Algorithmen stammen, mit den jeweiligen vorbestimmten Schwellenwerten anzeigt.

8. Verfahren nach Anspruch 6, **dadurch gekennzeichnet, dass** die Anwendung des Vereinigungskriteriums an der Kreuzung der Einträge der Matrix darin besteht, die Ergebnisse des einen oder des anderen der beiden Algorithmen auszuwählen, um das eindeutige Erfassungsergebnis zu bestimmen.

9. Verfahren nach Anspruch 6, **dadurch gekennzeichnet, dass** die Anwendung des Vereinigungskriteriums an der Kreuzung der Einträge der Matrix darin besteht, ein gewichtetes Ergebnis zu berechnen, welches auf der Anwendung eines jeweiligen Gewichtes entsprechend des betreffenden Zeilenindex und Spaltenindex der Matrix auf die Ergebnisse robuster Wahrscheinlichkeit basiert, welche von den beiden Algorithmen stammen, um das eindeutige Erfassungsergebnis zu bestimmen.

10. System zur Überwachung des Drucks von Reifen, welche die Räder eines Kraftfahrzeugs ausrüsten, von der Art, welche einen ersten Algorithmus (20) zur Abschätzung des Auftretens eines falschen Drucks an mindestens einem der Reifen, welcher auf einer Analyse der Abweichung von Geschwindigkeiten zwischen jedem der Räder basiert, und einen zweiten Algorithmus (10) zur Abschätzung des Auftretens eines falschen Drucks an mindestens einem der Reifen aufweist, welcher auf einer Spektralanalyse der Radgeschwindigkeit basiert, wobei sowohl der erste als auch der zweite Algorithmus für jedes Rad einen Wert der Wahrscheinlichkeit für zu niedrigen Luftdruck und der zugeordneten Vertrauensrate in Abhängigkeit von einem Geschwindigkeitsbereich des Rads liefert, wobei das System **dadurch gekennzeichnet ist, dass** es Mittel zur Vorbehandlung der Werte der Wahrscheinlichkeit für zu niedrigen Luftdruck und der Vertrauensrate, welche von dem ersten und zweiten Algorithmus stammen, um ein Ergebnis robuster Wahrscheinlichkeit zu bestimmen, welches sämtliche Geschwindigkeitsbereiche für jedes Rad und jeden Algorithmus berücksichtigt, und ein Entscheidungsmodul (30) aufweist, welches Mittel zum Vereinigen der Ergebnisse robuster Wahrscheinlichkeit, welche von den beiden Algorithmen stammen, aufweist, welche dafür ausgelegt sind, um das eine oder das andere der Ergebnisse robuster Wahrscheinlichkeit, welche von den beiden Algorithmen stammen, entsprechend der Anzahl von Rädern mit wahrscheinlich einem Problem von zu niedrigem Luftdruck oder entsprechend der Position der Räder mit wahrscheinlich einem Problem von zu niedrigem Luftdruck zu bevorzugen, um bei einer gegebenen Situation von zu niedrigem Luftdruck, ein eindeutiges Erfassungsergebnis ($(P \times T)_{final}$) der Situation von zu niedrigem Luftdruck zu liefern, welches dem Auslösen eines Warnsignals von zu niedrigem Druck dient.

**Claims**

1. Method for estimating the appearance of a pressure defect on at least one of the tyres fitted to the wheels of a motor vehicle, the said estimate resulting from an analysis of the angular velocities of the wheels according to a first algorithm (20) based on an analysis of the difference in speed between each of the wheels and according to a second algorithm (10) based on a spectral analysis of wheel speed, in which method each of the first and second algorithms supplies, for each wheel, a value for the probability of underinflation and for an associated confidence level dependent on a range of wheel speeds, the said method being **characterized in that** it comprises a phase of preprocessing the underinflation probability and confidence level values derived from the first and second algorithms, comprising the determination of a robust probability result $((P \times T)_{max})$ that takes all of the speed ranges into consideration for each wheel and each algorithm, and a step of transmitting the said robust probability results $((P \times T)_{max})$ to a decision-making module (30) performing a merger step consisting in favouring one or other of the robust probability results derived from the two algorithms according to the number of wheels probably having an underinflation problem or according to the position of the wheels probably having an underinflation problem so as to supply, for a given underinflation situation, a unique detection result $((P \times T)_{final})$ of the said underinflation situation that is used to trigger an underinflation alert signal.

2. Method according to Claim 1, **characterized in that** the determination of the robust probability result $((P \times T)_{max})$ taking all of the speed ranges into consideration for each wheel and each algorithm comprises a step of determining intermediate robust probability results for a given speed range and a given wheel which have integrated the confidence level values, respectively for each pair of probability and associated confidence level values derived from the first algorithm and for each pair of probability and associated confidence level values derived from the second algorithm, and a step of selecting the maximum intermediate robust probability result for each algorithm so as to determine the said robust probability result $((P \times T)_{max})$ taking all of the speed ranges into consideration for each wheel and each algorithm.

3. Method according to Claim 2, **characterized in that** the determining of the intermediate robust probability results involves a prior step of adapting the confidence level by linear interpolation between the confidence level values for each algorithm respectively so as to maximize the influence of the high confidence levels on obtaining the said intermediate robust probability results and minimize that of the low confidence levels.

4. Method according to any one of Claims 1 to 3, **characterized in that** it comprises a step of detecting an underinflation situation by thresholding (11, 21) the said robust probability results $((P \times T)_{max})$ derived respectively from the first and from the second algorithm, with respect to two respective thresholds, before transmitting the said robust probability results to the decision-making module (30) .

5. Method according to any one of Claims 1 to 4, **characterized in that** merger module (30) uses a merger matrix of the robust probability results derived from the two algorithms (10, 20) by using as input criterion for the matrix the number of wheels probably having an underinflation problem or the position of the wheels probably having an underinflation problem.

6. Method according to Claim 5, **characterized in that** the decision-making module (30) merges the results at the intersection of the inputs of the merger matrix by applying at least one merger criterion which takes account of the row index and of the column index in the matrix.

7. Method according to Claim 6, **characterized in that** the application of the merger criterion at the intersection of the inputs of the matrix consists in determining a Boolean status indicative of the underinflation situation as a function of a comparison of the robust probability results derived from the two algorithms against predefined respective thresholds.

8. Method according to Claim 6, **characterized in that** application of the merger criterion at the intersection of the inputs of the merger matrix consists in selecting the results of one or other of the two algorithms in order to determine the unique detection result.

9. Method according to Claim 6, **characterized in that** application of the merger criterion at the intersection of the inputs of the matrix consists in calculating a weighted result based on the application of a respective weighting, which is a function of the relative row and column indices of the matrix, to the robust probability results derived from the two algorithms so as to determine the unique detection result.

10. System for monitoring the pressure in the tyres fitted to the wheels of a motor vehicle, of the type comprising a first algorithm (20) for estimating the appearance of a pressure defect on at least one of the tyres based on an analysis of the difference in speed between each of the wheels and a second algorithm (10) for estimating the appearance of a pressure defect on at least one of the tyres based on a spectral analysis of wheel speed, each of the first and second algorithms supplying, for each wheel, a value for the probability of underinflation and for an associated confidence level dependent on a range of wheel speeds, the said system being **characterized in that** it comprises means of preprocessing the underinflation probability and confidence level values derived from the first and second algorithms so as to determine a robust probability result that takes all of the speed ranges into consideration for each wheel and each algorithm, and a decision-making module (30) comprising means of merging the robust probability results derived from the two algorithms, which are designed to favour one or other of the robust probability results derived from the two algorithms according to the number of wheels probably having an underinflation problem or according to the position of the wheels probably having an underinflation problem, so as to supply, for a given underinflation situation, a unique detection result ($(P \times T)_{final}$) of the said underinflation situation that is used to trigger an underinflation alert signal.

**Fig.1**

TAUX DE CONFIANCE ADAPTE

100%

50%

0%

0%          50%          100%

TAUX DE CONFIANCE BRUT

**Fig.2**

| 10 | (PxT)max → | 11 | → |
| 20 | (PxT)max → | 21 | → |

30    (PxT) final →

**Fig.3**

FREQUENTIEL

| Nb de roues probablement sous-gonglées | 0 roue | 1 | 2 | 3 | 4 |
|---|---|---|---|---|---|
| 0 | TR | TR | TR | TR | FR |
| 1 | TR | TR | TR | FR | FR |
| 2 | TR | TR | TR | FR | FR |
| 3 | TR | FR | FR | FR | FR |
| 4 | FR | FR | FR | FR | FR |

TEMPOREL

**Fig.4**

FREQUENTIEL

TEMPOREL

A l'intersection des entrées:
- un statut (vrai ou faux)
- une pondération
- une sélection

13

**EP 3 068 637 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2927018
- WO 2012127139 A
- US 2007061100 A